# EUROPEAN PATENT APPLICATION

(11) **EP 2 242 266 A2**
(43) Date of publication of application: **20.10.2010**
(21) Application number: 09707306.8
(22) Date of filing: 05.02.2009
(51) Int. Cl.: H04N 7/08, H04N 7/173

(54) **A METHOD AND DEVICE FOR SENDING AND RECEIVING METADATA FOR AN APPLICATION PROVIDING AN IPTV SERVICE**

(30) Priority: 05.02.2008 US 26348; 24.07.2008 US 83309; 06.08.2008 US 86563
(71) Applicant: Samsung Electronics Co., Ltd., Suwon-si, Gyeonggi-do 442-742 (KR)
(72) Inventor: KIM, Mun-Jo, Suwon-si Gyeonggi-do 441-735 (KR); HWANG, In-Chul, Suwon-si Gyeonggi-do 443-727 (KR)
(74) Representative: Robinson, Ian Michael
(86) International application number: PCT/KR2009/000549
(87) International publication number: WO 2009/099298

(57) **Abstract**

A method and apparatus for receiving metadata regarding an application providing an internet protocol television (IPTV) service, in which a metadata request message for requesting metadata regarding an application providing at least one IPTV service is generated, the metadata request message is transmitted to a second entity apparatus, and a metadata response message including the metadata regarding the application providing the at least one IPTV service is received from the second entity apparatus, in response to the metadata request message.

## Description

### Technical Field

The present invention relates methods and apparatuses for transmitting and receiving metadata of an application providing an internet protocol television (IPTV) service.

### Background Art

An internet protocol television (IPTV) communication service denotes a service providing an information service, a video content service, and a broadcasting service to TVs through an IP network, that is, a high-speed internet network. As a communication-broadcasting convergent service is being developed, interest in IPTV services is growing. Activation of the IPTV service may greatly affect not only communication and broadcasting industries but also content manufacturing and home appliance industries.

Conventionally, in order for an IPTV service user to be provided with the IPTV service through an IP network, the IPTV service user may own set-top boxes that are different for each IPTV vendor. Only the IPTV service user who owns an IPTV set-top box manufactured according to the standards set by an IPTV service provider providing an IPTV service may be provided with the IPTV service from the corresponding IPTV service provider. For example, when there are three IPTV service providers A, B, and C, a user who purchases A's set-top box may only use an IPTV service provided from A. Also, in order to use an IPTV service from B or C, a set-top box manufactured by B or C are separately purchased. Due to such a compatibility problem between the IPTV services and the set-top boxes, selection of the IPTV services is limited and consequently, the quality of the IPTV services deteriorates or it is difficult to expand a service base.

In this regard, an open IPTV forum has been recently established and the standardization is under discussion. In this forum, common standards, which are not dependent upon IPTV service providers, are formed and the provision of IPTV services to service users based on the common standards is under discussion.

The open IPTV forum aims to form an interface and a hardware platform which are not dependent upon IPTV service providers and to use IPTV services provided from a plurality of IPTV service providers by users. According to open IPTV forum architecture, even if the user does not own the set-top boxes that are different for each IPTV service provider, the user may use the IPTV services provided from a plurality of different IPTV service providers and thus a range of selection for the services may be expanded.

In order for the user to use the services provided from the plurality of different IPTV service providers, apparatuses for relaying services provided from the plurality of different IPTV service providers are present in a residential network having functional architecture according to the open IPTV forum. The apparatuses may be entities such as Application Gateway (AG), IMS Gateway (IG), and CSP Gateway (CG) according to the functional architecture of the open IPTV forum. These relaying apparatuses receive IPTV services provided from a provider network outside of the residential network and relay the received IPTV services to a terminal included in the residential network.

### Brief Description of the Drawings

FIG. 1 is a schematic diagram for explaining a method of transmitting and receiving metadata of an application providing an internet protocol television (IPTV) service, according to an embodiment of the present invention;
FIG. 2 is a schematic diagram for explaining flow of metadata of an application providing an IPTV service, according to an embodiment of the present invention;
FIG. 3 is a flowchart of an operation of transmitting and receiving metadata of an IPTV service discovery application and a content guide application in an unmanaged network model, according to an embodiment of the present invention;
FIG. 4 is a flowchart of an operation of transmitting and receiving metadata of an IPTV service discovery application in a managed network model, according to another embodiment of the present invention;
FIG. 5 is a flowchart of an operation of transmitting and receiving metadata of a content guide application in a managed network model, according to another embodiment of the present invention;
FIG. 6 is a flowchart of an operation of transmitting and receiving metadata of a content guide application in a managed network model by using a HTTP protocol or a DVB STP protocol, according to another embodiment of the present invention;
FIG. 7 illustrates a structure of a service provider record including metadata regarding an IPTV service discovery application, according to an embodiment of the present invention;
FIG. 8 illustrates a structure of a content guide offering record including metadata regarding a content guide application, according to another embodiment of the present invention;
FIG. 9 shows a 'Service Discovery' XML schema including a service provider record and a content guide offering record, according to an embodiment of the present invention;
FIGS. 10A and 10B show an XML schema of a service provider record, according to an embodiment of the present invention;
FIGS. 11A and 11 B show an XML schema of content guide offering record, according to another embodiment of the present invention;
FIG. 12 illustrates a structure of a service provider record, according to another embodiment of the present invention;
FIG. 13 illustrates a structure of a content guide offering record, according to another embodiment of the present invention;
FIG. 14 is a block diagram of a first entity apparatus, according to an embodiment of the present invention; and
FIG. 15 is a block diagram of a second entity apparatus, according to an embodiment of the present invention.

### Disclosure of the Invention

### Technical Solution

Aspects of the present invention provide method and apparatuses for transmitting and receiving metadata regarding an application providing an internet protocol television (IPTV) service, and computer readable recording media having recorded thereon a program for executing the methods.

### Advantageous Effects

According to one or embodiments of the present invention, by defining metadata including uniform resource identifier (URI) information regarding an internet protocol television (IPTV) service discovery application, and URI information regarding a content guide application by using an XML schema, a user of an IPTV terminal function (ITF) entity apparatus may access the IPTV service discovery application, and the content guide application by using the metadata, and thus the user may use a predetermined service provided by a service provider.

### Best mode for carrying out the Invention

According to an aspect of the present invention, there is provided a method of receiving metadata regarding an application providing an internet protocol television (IPTV) service of a first entity apparatus, the method includes generating a metadata request message for requesting metadata regarding an application providing at least one IPTV service; transmitting the metadata request message to a second entity apparatus; and receiving a metadata response message comprising the metadata regarding the application providing the at least one IPTV service, from the second entity apparatus, in response to the metadata request message.

The application providing the IPTV service may include at least one application from among an IPTV service discovery application, and a content guide application.

When the application providing the IPTV service may be the IPTV service discovery application, the metadata may include uniform resource identifier (URI) information regarding the IPTV service discovery application for searching for at least one service provided by an IPTV service provider.

When the application providing the IPTV service may be the content guide application, the metadata may include URI information regarding the content guide application for extracting content guide information.

When the application providing the IPTV service may be the IPTV service discovery application, the metadata may be provided as a part of a service provider record.

When the application providing the IPTV service may be the content guide application, the metadata may be provided as a part of a content guide offering record.

The metadata may include at least one information from among an identifier (ID) of an application, a name of the application, URI information for receiving an application icon, a kind of the application, information regarding a technology used in the application, priority of the application, URI information for connection with the application in a multicast manner, and URI information for connection with the application in a unicast manner.

The metadata request message may include a HTTP REQUEST message, and a SIP SUBSCRIBE message, and the metadata response message may include a HTTP RESPONSE message, and a SIP NOTIFY message.

When the application providing the IPTV service may be the content guide application, the metadata request message may further include an internet group management protocol (IGMP) JOIN message, and the metadata response message may further include a DVB STP multicast message.

The first entity apparatus may be an apparatus for performing a function corresponding to an entity defined in an open IPTV forum architecture, wherein the first entity apparatus may be an open IPTV terminal function (OITF) entity apparatus that accesses the IPTV service, or an IMS gateway functional (IG) entity apparatus that allows the OITF entity apparatus to access a network service, based on an IP multimedia subsystem (IMS) core network.

When the application providing the IPTV service may be the IPTV service discovery application, the second entity apparatus may be an apparatus for performing a function corresponding to an entity defined in an open IPTV forum architecture, wherein the second entity apparatus may be an IPTV service provider discovery entity apparatus for providing information that is required for an OITF entity apparatus to select at least one IPTV service provider.

When the application providing the IPTV service may be the content guide application, the second entity apparatus may be an apparatus for performing a function corresponding to an entity defined in an open IPTV forum architecture, wherein the second entity apparatus may be an IPTV service discovery entity apparatus for searching for at least one service provided by an IPTV service provider.

According to another aspect of the present invention, there is provided a method of transmitting metadata regarding an application providing an internet protocol television (IPTV) service of a second entity apparatus, the method includes receiving metadata request message for requesting metadata regarding an application providing at least one IPTV service; generating a metadata response message comprising the metadata regarding the application providing the at least one IPTV service, in response to the metadata request message; and transmitting the metadata response message to a first entity apparatus.

The application providing the IPTV service may include at least one application from among an IPTV service discovery application, and a content guide application.

When the application providing the IPTV service may be the IPTV service discovery application, the metadata may include uniform resource identifier (URI) information regarding the IPTV service discovery application for searching for at least one service provided by an IPTV service provider.

When the application providing the IPTV service may be the content guide application, the metadata may include URI information regarding the content guide application for extracting content guide information.

When the application providing the IPTV service may be the IPTV service discovery application, the metadata may be provided as a part of a service provider record.

When the application providing the IPTV service may be the content guide application, the metadata may be provided as a part of a content guide offering record.

The metadata may include at least one information from among an identifier (ID) of an application, a name of the application, URI information for receiving an application icon, a kind of the application, information regarding a technology used in the application, priority of the application, URI information for connection with the application in a multicast manner, and URI information for connection with the application in a unicast manner.

The metadata request message may include a HTTP REQUEST message, and a SIP SUBSCRIBE message, and the metadata response message may include a HTTP RESPONSE message, and a SIP NOTIFY message.

When the application providing the IPTV service may be the content guide application, the metadata request message may further include an internet group management protocol (IGMP) JOIN message, and the metadata response message may further include a DVB STP multicast message.

The first entity apparatus may be an apparatus for performing a function corresponding to an entity defined in an open IPTV forum architecture, wherein the first entity apparatus may be an open IPTV terminal function (OITF) entity apparatus that accesses the IPTV service, or an IMS gateway functional (IG) entity apparatus that allows the OITF entity apparatus to access a network service, based on an IP multimedia subsystem (IMS) core network.

When the application providing the IPTV service may be the IPTV service discovery application, the second entity apparatus may be an apparatus for performing a function corresponding to an entity defined in an open IPTV forum architecture, wherein the second entity apparatus may be an IPTV service provider discovery entity apparatus for providing information that is required for an OITF entity apparatus to select at least one IPTV service provider.

When the application providing the IPTV service may be the content guide application, the second entity apparatus is an apparatus for performing a function corresponding to an entity defined in an open IPTV forum architecture, wherein the second entity apparatus is an IPTV service discovery entity apparatus for searching for at least one service provided by an IPTV service provider.

According to an aspect of the present invention, there is provided a computer readable recording medium having recorded thereon a program for executing the method.

According to another aspect of the present invention, there is provided a first entity apparatus for receiving metadata regarding an application providing an internet protocol television (IPTV) service, the first entity apparatus includes a message generator for generating a metadata request message for requesting metadata regarding an application providing at least one IPTV service; a message transmitter for transmitting the metadata request message to a second entity apparatus; and a message receiver for receiving a metadata response message comprising the metadata regarding the application providing the at least one IPTV service, from the second entity apparatus, in response to the metadata request message.

According to another aspect of the present invention, there is provided a second entity apparatus for transmitting metadata regarding an application providing an internet protocol television (IPTV) service, the second entity apparatus includes a message receiver for receiving metadata request message for requesting metadata regarding an application providing at least one IPTV service; a message generator for generating a metadata response message comprising the metadata regarding the application providing the at least one IPTV service, in response to the metadata request message; and a message transmitter for transmitting the metadata response message to a first entity apparatus.

### Mode for Invention

The present invention will now be described more fully with reference to the accompanying drawings, in which exemplary embodiments of the invention are shown. In the drawings, like reference numerals denote like elements and the thicknesses of layers and regions are exaggerated for clarity.

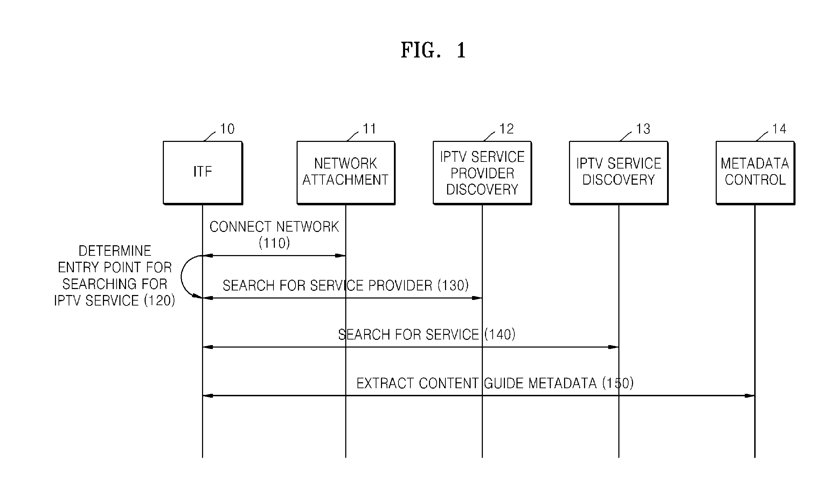

FIG. 1 is a schematic diagram for explaining a method of transmitting and receiving metadata of an application providing an internet protocol television (IPTV) service, according to an embodiment of the present invention.

In FIG. 1, at least one IPTV service provider provides a predetermined IPTV service to a user terminal, that is, an apparatus 10 for performing a function of an IPTV terminal function (ITF) entity ('ITF entity apparatus 10'). However, it would have been obvious to one of ordinary skill in the art to apply embodiments of the present invention to provide other services, instead of the IPTV service.

In operation 110, the ITF entity apparatus 10 and a network attachment entity apparatus 11 form an IPTV network. The ITF entity apparatus 10 acquires an IP address from the network attachment entity apparatus 11 to form the IPTV network. The network attachment entity apparatus 11 may be an apparatus for managing network connections, such as, a wide area network (WAN) gateway, and may perform user authentication of a network level, and access configuration. The ITF entity apparatus 10 may function as a user domain entity that is provided with an IPTV service from an IPTV service provider to use the IPTV service, and may perform a plurality of entity functions.

In operation 120, the ITF entity apparatus 10 determines an entry point for searching for the IPTV service. The ITF entity apparatus 10 may search for the IPTV service provider, prior to searching for the IPTV service. Thus, in operation 120, the ITF entity apparatus 10 determines the entry point that is the same as an IP address of an apparatus 12 for performing a function of an IPTV service provider discovery entity ('IPTV service provider discovery entity apparatus 12'). Information of the IP address of the IPTV service provider discovery entity apparatus 12 may be received from the network attachment entity apparatus 11 during the formation of the IPTV network, or alternatively, may be contained in the ITF entity apparatus 10 rather than being received from an external source.

In operation 130, the ITF entity apparatus 10 accesses the IPTV service provider discovery entity apparatus 12, and searches for information of at least one IPTV service provider. A single ITF entity apparatus 10, that is, a single user terminal may search for information of a plurality of different IPTV service providers.

The information of the IPTV service provider may include uniform resource identifier (URI) information regarding IPTV service discovery applications, and information regarding a user interface (UI) that is used when a user of the ITF entity apparatus 10 selects an IPTV service provider. For example, the information related to a UI, such as logos, trademarks or icons of a plurality of IPTV service providers is provided to the ITF entity apparatus 10, and then is displayed to the user by the ITF entity apparatus 10. Thus, the user of the ITF entity apparatus 10 may select one IPTV service provider from among the IPTV service providers.

Since the information regarding the IPTV service providers is provided to the ITF entity apparatus 10 through the IPTV service provider discovery entity apparatus 12, the user may select a predetermined IPTV service provider through the ITF entity apparatus 10, and may use an IPTV service of the selected IPTV service provider.

The user of the ITF entity apparatus 10 may access applications for searching for the IPTV service provided by the IPTV service provider that is selected based on the URI information regarding the IPTV service discovery applications.

In operation 140, the ITF entity apparatus 10 searches for the IPTV service of the IPTV service provider, based on the URI information regarding the IPTV service discovery applications, which is received in operation 130. When the user selects one IPTV service provider from among a plurality of IPTV service providers in operation 130, the ITF entity apparatus 10 may access a URI for the IPTV service discovery applications of the selected IPTV service provider, and may search for the IPTV service.

According to another embodiment of the present invention, the ITF entity apparatus 10 may receive URI information of an apparatus 13 for performing a function of an IPTV service discovery entity ('IPTV service discovery entity apparatus 13'), in operation 130. In operation 140, the ITF entity apparatus 10 may access the IPTV service discovery entity apparatus 13 according to a URI address of the IPTV service discovery entity apparatus 13, which is received in operation 130, and may search for information regarding at least one IPTV service. The information regarding the IPTV service may include URI information regarding applications providing content-guide. In operation 150, the ITF entity apparatus 10 may access the applications providing content-guide, which is received in operation 140, based on the URI information regarding the received applications providing content-guide.

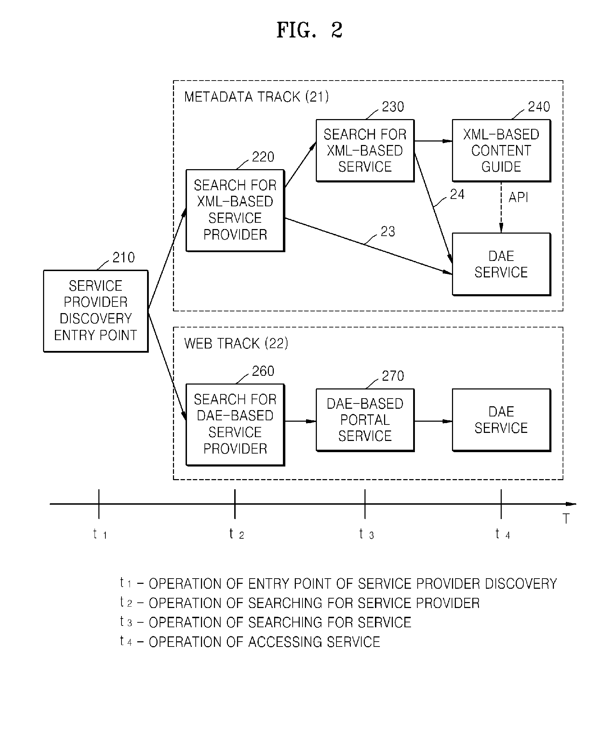

FIG. 2 is a schematic diagram for explaining flow of metadata of an application providing an IPTV service, according to an embodiment of the present invention.

A data flow for providing information for finally accessing applications providing a IPTV service from a service provider discovery entry point 210 may include two flows of a web track 22 and a metadata track 21.

When the ITF entity apparatus 10 is based on the flow of the web track 22, the ITF entity apparatus 10 operates according to a DAE (Declarative Application Environment) application that is provided as a web service from an operation where a service provider is searched for (operation 260).

When the ITF entity apparatus 10 is based on the flow of the metadata track 21, the ITF entity apparatus 10 accesses the IPTV service provider discovery entity apparatus 12, and searches for XML-based information regarding an IPTV service provider (operation 220). The XML-based information regarding the IPTV service provider may include URI information regarding an IPTV service discovery application. The user of the ITF entity apparatus 10 may access applications for searching for a service provided by the IPTV service provider through the URI information regarding the IPTV service discovery application (operation 23).

According to another embodiment of the present invention, when the ITF entity apparatus 10 is based on the flow of the metadata track 21, the ITF entity apparatus 10 may access the IPTV service provider discovery entity apparatus 12, and may XML-based URI information regarding the IPTV service discovery entity apparatus 13 (operation 220). The ITF entity apparatus 10 may access the IPTV service discovery entity apparatus 13 according to a URI address of the IPTV service discovery entity apparatus 13, which is contained in the received URI information, and may search for XML-based information regarding at least one IPTV service (operation 230). The URI information regarding the IPTV service may include URI information regarding an application providing content-guide. The user of the ITF entity apparatus 10 may access an application providing a content guide service through the URI information regarding the URI information regarding an application providing content-guide (operation 24).

According to an embodiment of the present invention, metadata including URI information regarding an IPTV service discovery application, and URI information regarding a content guide application is defined by using a XML schema, and thus a user of an ITF entity apparatus accesses the IPTV service discovery application and the content guide application so as to use a predetermined service provided by a service provider.

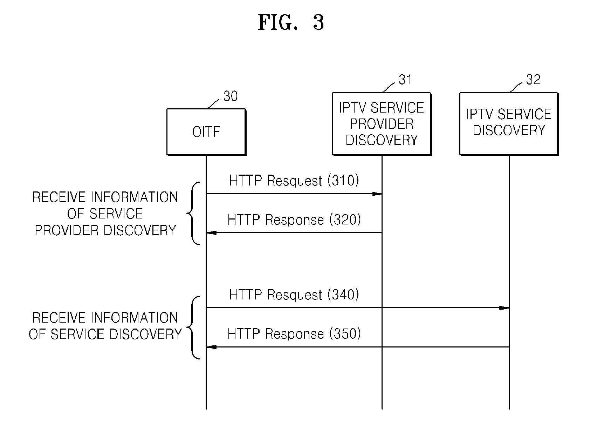

FIG. 3 is a flowchart of an operation of transmitting and receiving metadata of an IPTV service discovery application and a content guide application in an unmanaged network model, according to an embodiment of the present invention.

Referring to FIG. 3, an open IPTV terminal function (OITF) entity apparatus 30, an IPTV service provider discovery entity apparatus 31, and an IPTV service discovery entity apparatus 32 are illustrated. The OITF entity apparatus 30 is an apparatus for performing entity functions of a user domain according to open IPTV forum architecture. The IPTV service provider discovery entity apparatus 31, and the IPTV service discovery entity apparatus 32 are apparatus for performing entity functions of a network domain that is managed by an IPTV service provider, or a network provider.

The OITF entity apparatus 30 accesses an IPTV service through gateways of the user domain, that is, an application gateway (AG) functional entity apparatus and an IP multimedia subsystem (IMS) gateway (IG) functional entity apparatus. An apparatus, which finally uses the IPTV service such as a TV, may be the OITF entity apparatus 30.

Referring to FIG. 3, in operation 310, the OITF entity apparatus 30 transmits a request for information of at least one IPTV service provider to the IPTV service provider discovery entity apparatus 31. The information of the IPTV service provider includes metadata including URI information of an IPTV service discovery application. According to the present embodiment, the OITF entity apparatus 30 transmits a hypertext transfer protocol (HTTP) REQUEST message that is generated according to HTTP to the IPTV service provider discovery entity apparatus 31. However, it would have been obvious to one of ordinary skill in the art to use another protocol and another message.

In operation 320, the IPTV service provider discovery entity apparatus 31 transmits a response message including information of at least one IPTV service provider to the OITF entity apparatus 30, according to the received request message in operation 310. According to the present embodiment, the IPTV service provider discovery entity apparatus 31 transmits the HTTP RESPONSE message that is generated according to HTTP to the OITF entity apparatus 30. However, it would have been obvious to one of ordinary skill in the art to use another protocol and another message.

A user of the OITF entity apparatus 30 may access a service discovery application provided by the IPTV service provider through URI information regarding an IPTV service discovery application, which is contained in information regarding the IPTV service provider.

According to another embodiment of the present invention, the OITF entity apparatus 30 accesses the IPTV service provider discovery entity apparatus 12, and receives XML-based URI information regarding the IPTV service discovery entity apparatus 32. Then, in operation 340, the OITF entity apparatus 30 accesses the IPTV service discovery entity apparatus 32, and transmits a request message for at least one IPTV service to the IPTV service discovery entity apparatus 32. The information regarding the IPTV service includes metadata including URI information regarding an application providing a content guide service. According to the present embodiment, the OITF entity apparatus 30 transmits the HTTP REQUEST message that is generated according to HTTP to the IPTV service discovery entity apparatus 32. However, it would have been obvious to one of ordinary skill in the art to use another protocol and another message.

In operation 350, the IPTV service discovery entity apparatus 32 transmits a response message including the information regarding at least one IPTV service to the OITF entity apparatus 30, according to the received request message in operation 340. According to the present embodiment, the IPTV service discovery entity apparatus 32 transmits a HTTP RESPONSE message that is generated according to HTTP to the OITF entity apparatus 30. However, it would have been obvious to one of ordinary skill in the art to use another protocol and another message.

A user of the OITF entity apparatus 30 may access an application providing a content guide service through URI information regarding an application providing the content guide service, which is contained in the information of the IPTV service.

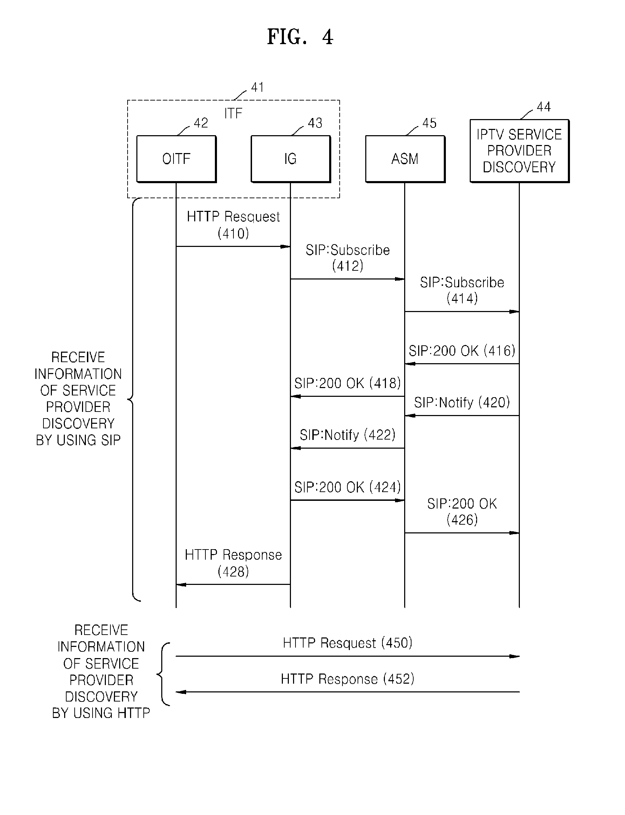

FIG. 4 is a flowchart of an operation of transmitting and receiving metadata of an IPTV service discovery application in a managed network model, according to another embodiment of the present invention.

In FIG. 4, an OITF entity apparatus 42, an IMS gateway functional (IG) entity apparatus 43, an authentication and session management (ASM) entity apparatus 45, and an IPTV service provider discovery entity apparatus 44 are illustrated. An ITF entity apparatus 41 may be an apparatus for performing entity functions of a user domain, and may perform a plurality of entity functions. In FIG. 4, the ITF entity apparatus 41 includes the OITF entity apparatus 42 and the IG entity apparatus 43. The OITF entity apparatus 42 and the IG entity apparatus 43 perform entity functions of a user domain according to open IPTV forum architecture. The ASM entity apparatus 45 and the IPTV service provider discovery entity apparatus 44 perform entity functions of a network domain that is managed by a network provider. The IG entity apparatus 43 and the ASM entity apparatus 45 perform entity functions that are required in a managed model network model from among IPTV service models according to open IPTV forum architecture.

The OITF entity apparatus 42 accesses an IPTV service through gateways of the user domain, that is, an AG functional entity apparatus and the IG entity apparatus 43. An apparatus, which finally uses the IPTV service such as a TV, may be the OITF entity apparatus 42.

The IG entity apparatus 43 allows the OITF entity apparatus 42 to access the IPTV service based on an IP multimedia subsystem (IMS) core network. The IG entity apparatus 43 relays apparatuses for performing entity functions of a network domain, that is, the ASM entity apparatus 45 and the IPTV service provider discovery entity apparatus 44, in order for the OITF entity apparatus 42 to access the IPTV service.

The ASM entity apparatus 45 performs access management and IPTV service session management so that only a specific user may access a managed network.

The IPTV service provider discovery entity apparatus 44 generates information regarding at least one service provider.

Referring to FIG. 4, in operation 410, the OITF entity apparatus 42 transmits a request message for information regarding at least one IPTV service provider to the IG entity apparatus 43. The information regarding the IPTV service provider includes metadata including URI information regarding an IPTV service discovery application. The OITF entity apparatus 42 and the IG entity apparatus 43 are apparatuses for performing entity functions of a user domain, and transmit and receive messages that are written in a predetermined massage format defined therebetween. In FIG.4, the OITF entity apparatus 42 transmits a HTTP REQUEST message generated according to HTTP to the IG entity apparatus 43.

In operation 412, the IG entity apparatus 43 generates a SIP SUBSCRIBE message, according to the received request message in operation 410, and transmits the SIP SUBSCRIBE message to the ASM entity apparatus 45. The SIP SUBSCRIBE message is a message to be transmitted to the IPTV service provider discovery entity apparatus 44. However, since the ASM entity apparatus 45 performs the IPTV service session management in the managed network model, the SIPSUBSCRIBE message is transmitted to the IPTV service provider discovery entity apparatus 44 through the ASM entity apparatus 45.

In operation 414, the ASM entity apparatus 45 transmits the SIP SUBSCRIBE that is received from the IG entity apparatus 43 in operation 412 to the IPTV service provider discovery entity apparatus 44.

In operation 416, the IPTV service provider discovery entity apparatus 44 transmits a SIP 200 OK message informing that the SIP SUBSCRIBE message is normally received in operation 414 to the ASM entity apparatus 45.

In operation 418, the ASM entity apparatus 45 transmits the received SIP 200 OK in operation 416 to the IG entity apparatus 43.

In operation 420, the IPTV service provider discovery entity apparatus 44 transmits a SIP NOTIFY message containing information regarding at least one service provider to the ASM entity apparatus 45.

In operation 422, the ASM entity apparatus 45 transmits the SIP NOTIFY message that is received from the IPTV service provider discovery entity apparatus 44 in operation 420 to the IG entity apparatus 43.

In operation 424, the IG entity apparatus 43 transmits the SIP 200 OK message informing that the SIP NOTIFY message is normally received in operation 422 to the ASM entity apparatus 45.

In operation 426, the ASM entity apparatus 45 transmits the received SIP 200 OK in operation 424 to the IPTV service provider discovery entity apparatus 44.

In operation 428, the IG entity apparatus 43 transmits a response message containing information regarding at least one IPTV service provider to the OITF entity apparatus 42. The response message containing the information regarding at least one service provider is generated in a predetermine message format that is defined between the OITF entity apparatus 42 and the IG entity apparatus 43, and is transmitted to the OITF entity apparatus 42. In FIG. 4, the IG entity apparatus 43 transmits a HTTP RESPONSE message generated according to HTTP to the OITF entity apparatus 42.

A user of the OITF entity apparatus 42 may access applications for searching for a service provided by an IPTV service provider through URI information regarding an IPTV service discovery application, which is contained in the information regarding the IPTV service provider.

According to the present embodiment, a message is transmitted between apparatuses for performing entity functions by using HTTP and SIP. However, it would have been obvious to one of ordinary skill in the art to use another protocol and another message.

According to another embodiment of the present invention, in operation 450, the OITF entity apparatus 42 transmits a request message for information regarding at least one IPTV service provider to the IPTV service provider discovery entity apparatus 44. The information regarding the IPTV service provider includes metadata including URI information regarding an IPTV service discovery application. According to the present embodiment, the OITF entity apparatus 42 transmits the HTTP REQUEST message generated according to HTTP to the IPTV service provider discovery entity apparatus 44. However, it would have been obvious to one of ordinary skill in the art to use another protocol and another message.

In operation 452, the IPTV service provider discovery entity apparatus 44 transmits a response message containing information regarding at least one IPTV service provider, according to the received request message in operation 450. According to the present embodiment, the IPTV service provider discovery entity apparatus 44 transmits a HTTP RESPONSE message generated according to HTTP to the OITF entity apparatus 42. However, it would have been obvious to one of ordinary skill in the art to use another protocol and another message.

The user of the OITF entity apparatus 42 may access applications for searching for a service provided by an IPTV service provider through URI information regarding an IPTV service discovery application, which is contained in the information regarding the IPTV service provider.

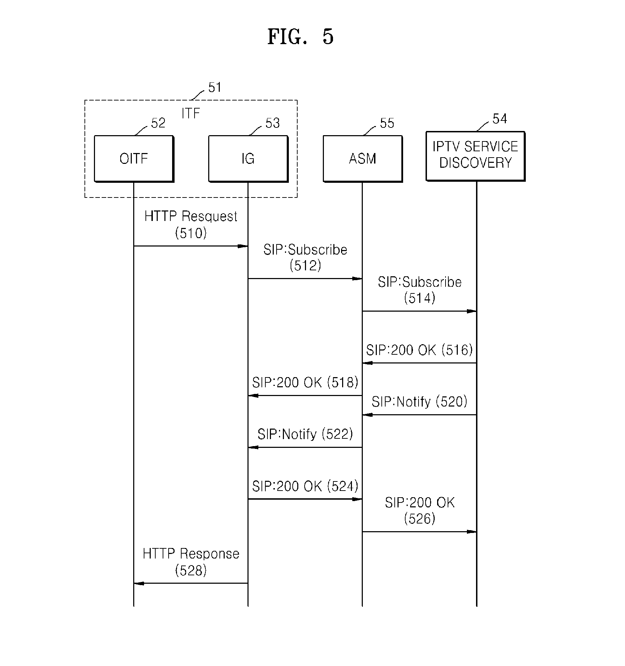

FIG. 5 is a flowchart of an operation of transmitting and receiving metadata of a content guide application in a managed network model, according to another embodiment of the present invention.

The operation of FIG. 5 is the same as the operation of FIG. 4 except that information regarding an IPTV service, which includes metadata regarding a content guide application, is searched for accessing an IPTV service discovery entity apparatus 54.

Thus, an IG entity apparatus 53 generates a SIP SUBSCRIBE message for requesting information regarding a service provider or information regarding a service. The IPTV service discovery entity apparatus 54 generates a SIP NOTIFY message containing information regarding at least one service provided by a predetermined service provider.

In operation 510, an OITF entity apparatus 52 transmits a request message for information regarding IPTV service to the IG entity apparatus 53. The information regarding the IPTV service includes metadata containing URI information regarding applications providing a content guide service. The OITF entity apparatus 52 and the IG entity apparatus 53 are apparatuses for performing entity functions of a user domain, and transmit and receive messages that are written in a predetermined massage format defined therebetween. In FIG. 5, the OITF entity apparatus 52 transmits a HTTP REQUEST message generated according to HTTP to the IG entity apparatus 53.

In operation 512, the IG entity apparatus 53 generates a SIP SUBSCRIBE message according to the received request message in operation 510, and transmits the SIP SUBSCRIBE message to an ASM entity apparatus 55. The SIP SUBSCRIBE message is a massage to be transmitted to the IPTV service discovery entity apparatus 54.

In operation 514, the ASM entity apparatus 55 transmits the SIP SUBSCRIBE message that is received from the IG entity apparatus 53 in operation 512 to the IPTV service discovery entity apparatus 54.

In operation 516, the IPTV service discovery entity apparatus 54 transmits a SIP 200 OK message informing that the SIP SUBSCRIBE message is normally received in operation 514 to the ASM entity apparatus 55.

In operation 518, the ASM entity apparatus 55 transmits the received SIP 200 OK message in operation 516 to the IG entity apparatus 53.

In operation 520, the IPTV service discovery entity apparatus 54 transmits a SIP NOTIFY message containing information regarding at least one service to the ASM entity apparatus 55.

In operation 522, the ASM entity apparatus 55 transmits the SIP NOTIFY that is received from the IPTV service discovery entity apparatus 54 in operation 520 to the IG entity apparatus 53.

In operation 524, the IG entity apparatus 53 transmits a SIP 200 OK message informing that the SIPNOTIFY is normally received in operation 522 to the ASM entity apparatus 55.

In operation 526, the ASM entity apparatus 55 transmits the received SIP 200 OK message in operation 524 to the IPTV service discovery entity apparatus 54.

In operation 528, the IG entity apparatus 53 transmits a response message containing information regarding at least one service to the OITF entity apparatus 52. The response message containing the information regarding at least one service is generated in a predetermine message format that is defined between the OITF entity apparatus 52 and the IG entity apparatus 53, and is transmitted to the OITF entity apparatus 52. In FIG. 5, the IG entity apparatus 53 transmits a HTTP RESPONSE message generated according to HTTP to the OITF entity apparatus 52.

A user of the OITF entity apparatus 52 may access an application providing a content guide service through URI information regarding the application providing the content guide service, which is contained in the information regarding the IPTV service.

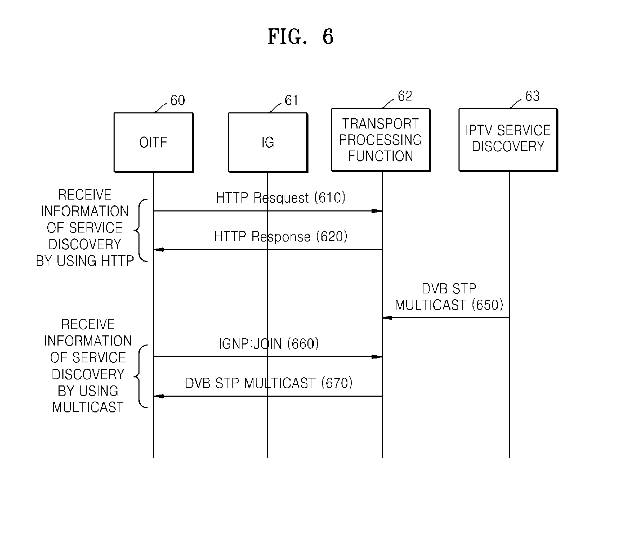

FIG. 6 is a flowchart of an operation of transmitting and receiving metadata of a content guide application in a managed network model by using a HTTP protocol or a DVB STP protocol, according to another embodiment of the present invention.

In operation 610, an OITF entity apparatus 60 transmits a request message for information of an IPTV service to an IPTV service discovery entity apparatus 63. The information of the IPTV service includes metadata including URI information regarding an application providing a content guide service. The OITF entity apparatus 60 transmits a HTTP REQUEST message generated according to HTTP to the IPTV service discovery entity apparatus 63. However, it would have been obvious to one of ordinary skill in the art to use another protocol and another message.

In operation 620, the IPTV service discovery entity apparatus 63 transmits a response message containing information regarding at least one IPTV service, according to the received request message in operation 610 to the OITF entity apparatus 60. According to the present embodiment, the IPTV service discovery entity apparatus 63 transmits a HTT PRESPONSE message generated according to HTTP to the OITF entity apparatus 60. However, it would have been obvious to one of ordinary skill in the art to use another protocol and another message.

A user of the OITF entity apparatus 60 may access an application providing a content guide service through URI information regarding an application providing the content guide service, which is contained in the information regarding the IPTV service.

According to another embodiment of the present invention, the OITF entity apparatus 60 may receive the information regarding the IPTV service from the IPTV service discovery entity apparatus 63 in a multicast manner using a DVB SD&S transport protocol (DVB STP).

In operation 650, the IPTV service discovery entity apparatus 63 transmits a DVB STP multicast message containing the information regarding the IPTV service to a transport processing function entity apparatus 62. The information regarding the IPTV service includes metadata containing URI regarding an application providing a content guide service. The transport processing function entity apparatus 62 is an apparatus for performing entity functions of managing a multicast group, and previously receives an internet group management protocol (IGMP) JOIN message for requesting of joining in the multicast group from the OITF entity apparatus 60 of a user domain, in operation 660.

In operation 670, The transport processing function entity apparatus 62 transmits the DVB STP multicast message containing the information regarding the IPTV service, which is received from the IPTV service discovery entity apparatus 63, to the OITF entity apparatus 60 belonging to a corresponding multicast group.

A user of the OITF entity apparatus 60 may access an application providing a content guide service included in the information regarding the IPTV service.

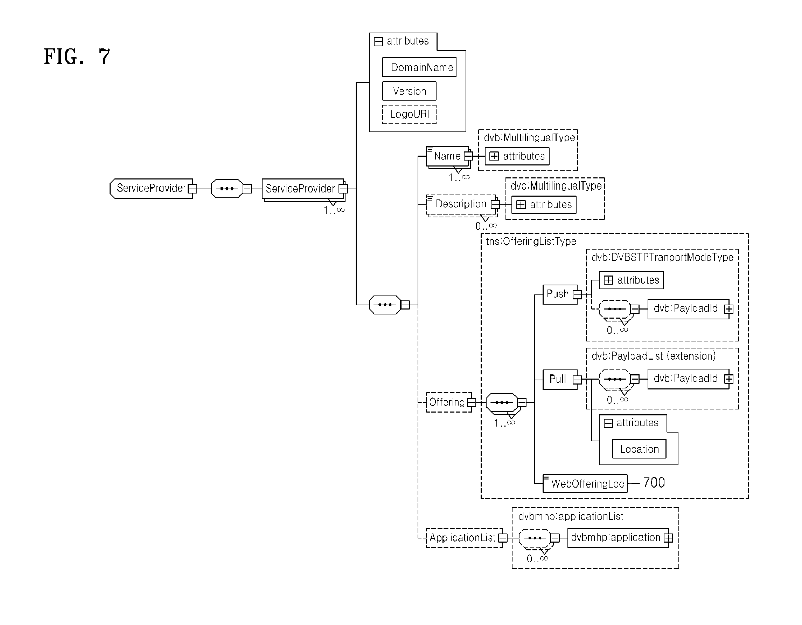

FIG. 7 illustrates a structure of a service provider record including metadata regarding an IPTV service discovery application, according to an embodiment of the present invention.

The OITF entity apparatuses 30 and 42 receive the service provider record from IPTV service provider discovery entity apparatuses 31 and 44, in response to requests of the OITF entity apparatuses 30 and 42.

The service provider record includes information regarding an IPTV service provider. For example, a'LogoURl' attribute 710 indicates UI information such as a logo that is used when a user selects an IPTV service provider. The OITF entity apparatuses 30 and 42 displays the UI information through the 'LogoURI' attribute 710 so that the user of the OITF entity apparatuses 30 and 42 may select the IPTV service provider.

A'WebOfferingLoc' element 700 indicates URI information regarding an IPTV service discovery application. A user of the OITF entity apparatuses 30 and 42 may access an application for searching for a service provided by the IPTV service provider through the URI information regarding the IPTV service discovery application, which is indicated by the 'WebOfferingLoc' element 700 included in the service provider record.

In addition, an XML schema of the service provider record is described in detail in the standard 'DigitalVideo Broadcasting: Transport of MPEG-2 Based DVB Services over IP BasedNetworks', and thus its detailed description will be omitted.

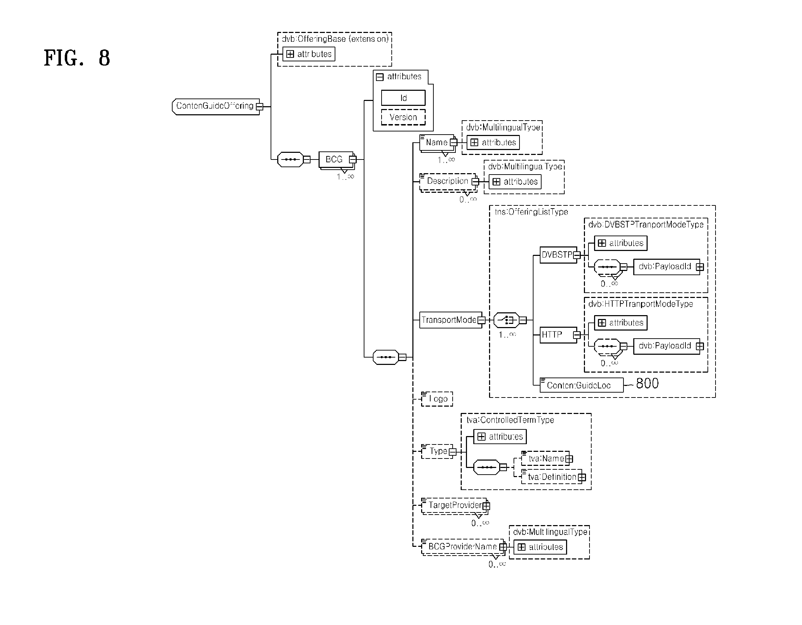

FIG. 8 illustrates a structure of a content guide offering record including metadata regarding a content guide application, according to another embodiment of the present invention.

The OITF entity apparatuses 30, 52, and 60 receive the content guide offering record from the IPTV service discovery entity apparatuses 32, 54, and 63, in response to requests of the OITF entity apparatuses 30, 52, and 60, or in a multicast manner.

The content guide offering record is a part of information regarding an IPTV service. A 'ContentGuideLoc' element 800 indicates URI information regarding an application providing a content guide service. A user of the OITF entity apparatuses 30, 52, and 60 may access the application providing the content guide service through the URI information regarding the content guide service, which is indicated by the 'ContentGuideLoc' element 800 included in the content guide offering record.

In addition, an XML schema of the service provider record is described in detail in the standard 'DigitalVideo Broadcasting: Transport of MPEG-2 Based DVB Services over IP BasedNetworks', and thus its detailed description will be omitted.

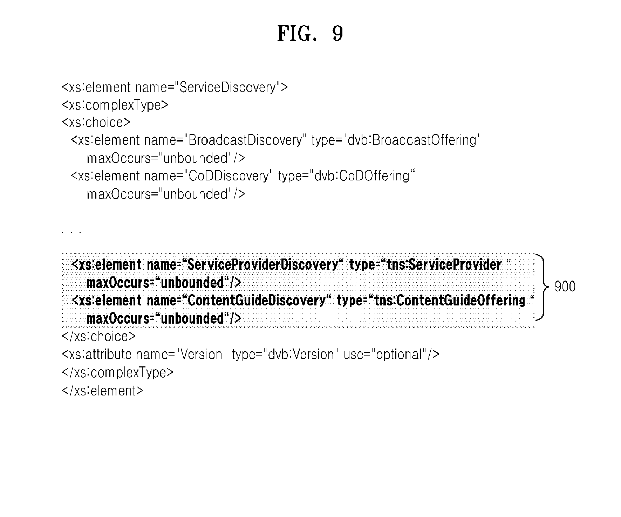

FIG. 9 shows a 'Service Discovery' XML schema including a service provider record and a content guide offering record, according to an embodiment of the present invention.

As shown in FIG. 9, a 'Service Discovery' element may include the service provider record that is described in a'ServiceProvider'type, and the content guide offering record that is described in a 'ContentGuideOffering' type (900).

According to the present embodiment, the 'Service Discovery' element includes the service provider record and the content guide offering record. However, it would have been obvious to one of ordinary skill in the art that another element may include a service provider record, and a content guide offering record.

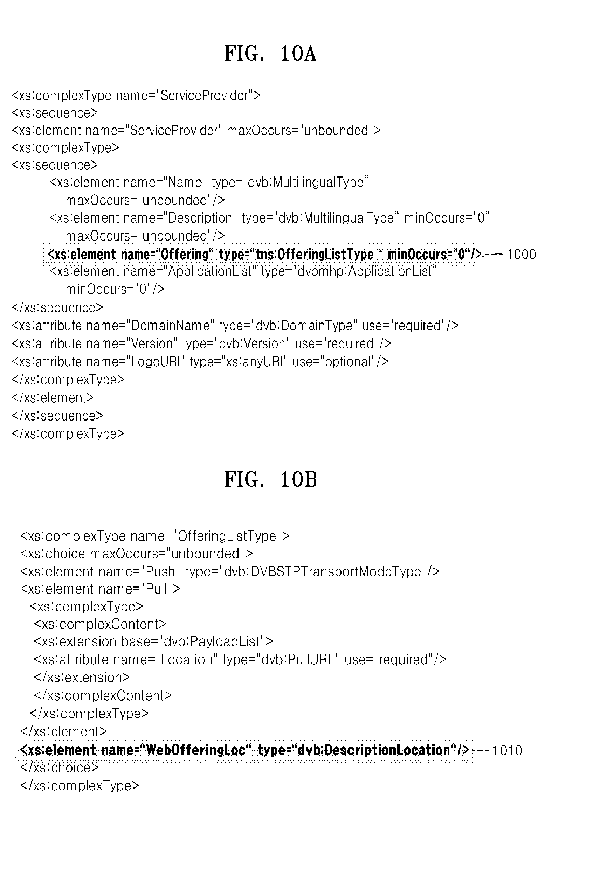

FIGS. 10A and 10B show an XML schema of a service provider record, according to an embodiment of the present invention.

The service provider record is described in a 'ServiceProvider' type. The 'ServiceProvider' type includes an 'Offering' element of 'OfferingListType'. The 'Offering' element includes a 'WebOfferingLoc' element 1010. The WebOfferingLoc' element 1010 indicates URI information regarding an IPTV service discovery application. A user of the OITF entity apparatuses 30 and 42 may access an application for searching for a service provided by an IPTV service provider through the URI information regarding the IPTV service discovery application, which is indicated by the WebOfferingLoc' element 1010.

It would have been obvious to one of ordinary skill in the art to change names of elements according to the present embodiment, or to change the element to an attribute form.

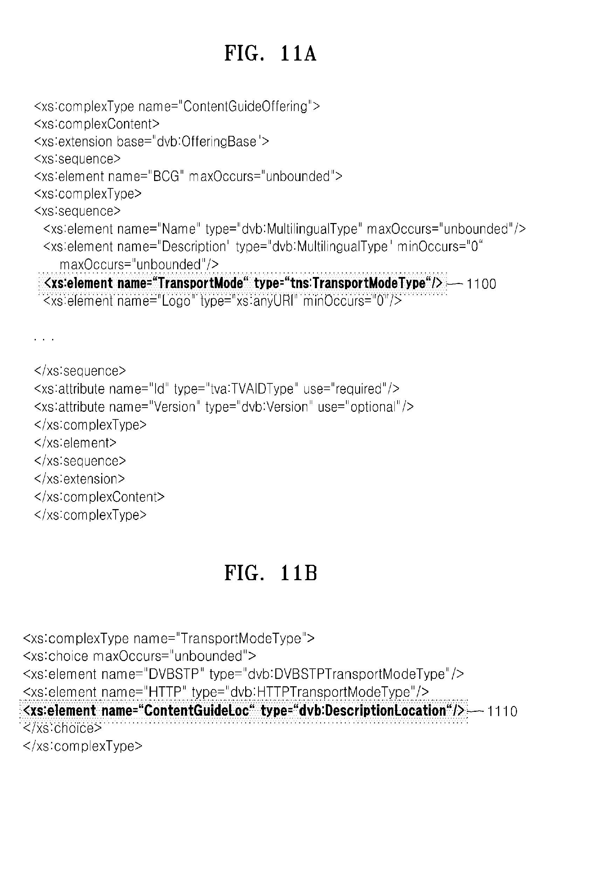

FIGS. 11A and 11 B show an XML schema of content guide offering record, according to another embodiment of the present invention.

The content guide offering record is descried in a 'ContentGuideOffering' type. The 'ContentGuideOffering' type includes a 'TransportMode' element 1100 of 'TransportModeType'.

The 'TransportMode' element 1100 includes a 'ContentGuideLoc' element 1110. The 'ContentGuideLoc' element 1110 indicates URI information regarding an application providing a content guide service. A user of the OITF entity apparatuses 30, 52, and 60 may access an application providing a content guide service through the URI information regarding the application providing the content guide service, which is indicated by the 'ContentGuideLoc' element 1110 included in the content guide offering record.

It would have been obvious to one of ordinary skill in the art to change names of elements according to the present embodiment, or to change the element to an attribute form.

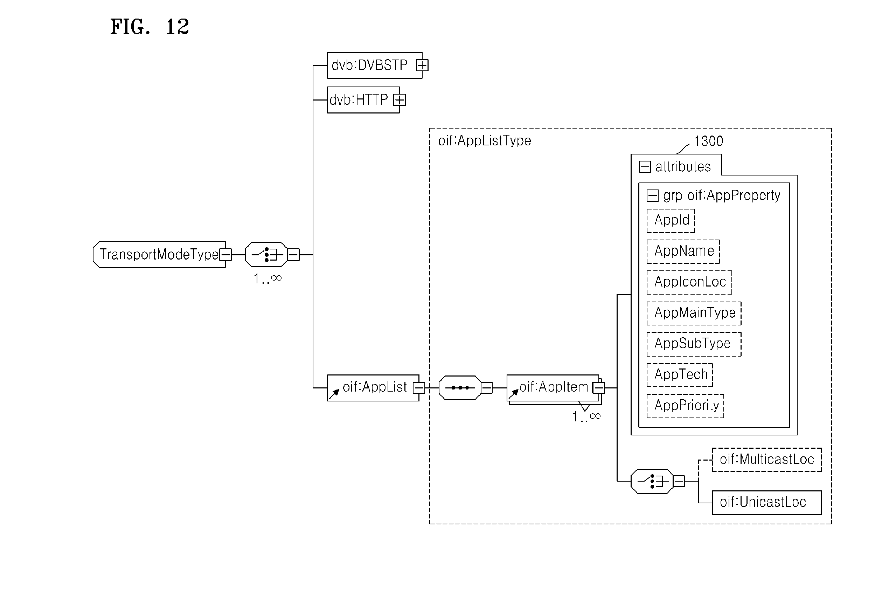

FIG. 12 illustrates a structure of a service provider record, according to another embodiment of the present invention.

As shown in FIGS. 10A and 10B, the service provider record is described in a 'ServiceProvider' type. The 'ServiceProvider' type includes an 'Offering' element of an 'OfferingListType' 1200.

According to another embodiment of the present invention, the 'Offering' element includes an 'Appltem' element 1210. The 'Appltem' element 1210 may include 'Appld', 'AppName', ApplconLoc','AppMainType', 'AppSubType', 'AppTech' and 'AppPriority' as attributes.

The'Appld' indicates an identifier (ID) of an application, the 'AppName' indicates a name of the application, and the 'ApplconLoc' indicates URI information for receiving an application icon. The 'AppMainType' and 'AppSubType' indicate a kind of the application, the 'AppTech' indicates information regarding a technology used in the application, and the 'AppPriority' indicates priority of the application.

The'Appltem' element 1210 may include'MulticastLoc' and 'UnicastLoc' as elements. The 'MulticastLoc' indicates URI information for connection with an application in a multicast manner, and the 'UnicastLoc' indicates URI information for connection with the application in a unicast manner.

A user of the OITF entity apparatuses 30 and 42 may access an application for searching for a service provided by an IPTV service provider through URI information regarding an IPTV service discovery application, which is indicated by the 'UnicastLoc' element.

It would have been obvious to one of ordinary skill in the art to change names and locations of elements and attributes of the XML schema of the service provider record according to the present embodiment.

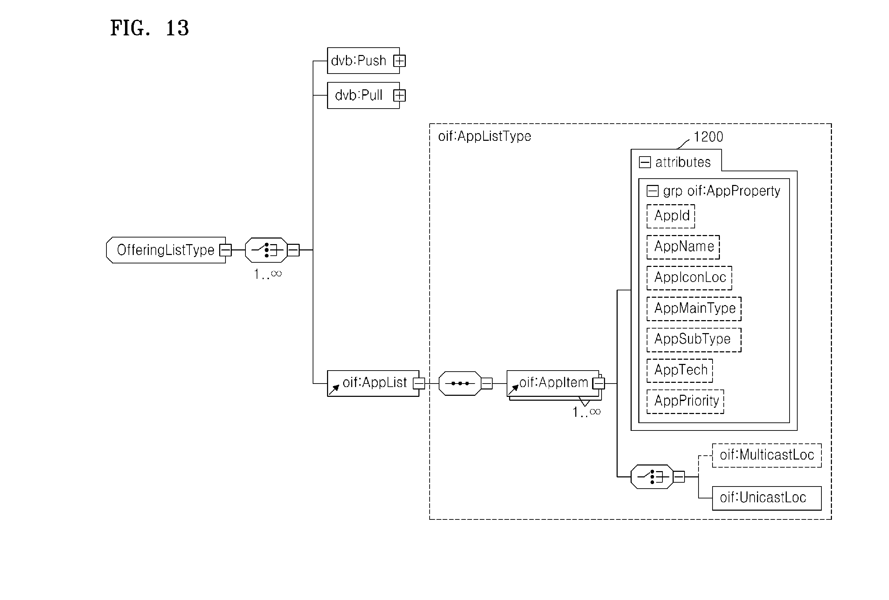

FIG. 13 illustrates a structure of a content guide offering record, according to another embodiment of the present invention.

As shown in FIGS. 11A and 11 B, the content guide offering record is described in a 'ContentGuideOffering' type. The 'ContentGuideOffering' type includes a 'TransportMode' element of a 'TransportModeType' 1300.

According to another embodiment of the present invention, the 'TransportMode' element includes an'Appltem' element 1310. The'Appltem' element 1310 may include'Appld','AppName', ApplconLoc','AppMainType', 'AppSubType', 'AppTech' and 'AppPriority' as attributes.

The 'Appld' indicates an ID of an application, the 'AppName' indicates a name of the application, and the 'ApplconLoc' indicates URI information for receiving an application icon. The 'AppMainType' and 'AppSubType' indicate a kind of the application, the 'AppTech' indicates information regarding a technology used in the application, and the 'AppPriority' indicates priority of the application.

The'Appltem' element 1310 may include'MulticastLoc' and 'UnicastLoc' as elements. The 'MulticastLoc' indicates URI information for connection with the application in a multicast manner, and the'UnicastLoc' indicates URI information for connection with the application in a unicast manner.

A user of the OITF entity apparatuses 30, 52, and 60 may access an application providing a content guide service through URI information regarding an application providing the content guide service, which is indicated by the 'UnicastLoc' element.

It would have been obvious to one of ordinary skill in the art to change names and locations of elements and attributes of the XML schema of the content guide offering record according to the present embodiment.

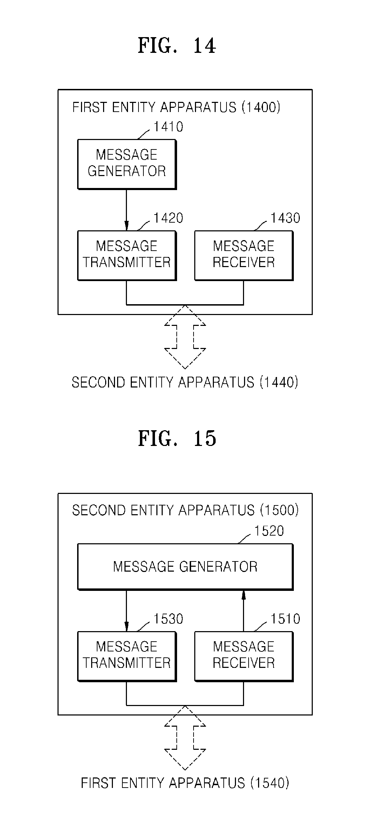

FIG. 14 is a block diagram of a first entity apparatus 1400, according to an embodiment of the present invention.

The first entity apparatus 1400 includes a message generator 1410, a message transmitter 1420, and a message receiver 1430. The first entity apparatus 1400 may be the OITF entity apparatus 30, 42, or 60, or the IG entity apparatus 43 or 53.

The message generator 1410 generates a metadata request message for requesting metadata regarding an application providing at least one IPTV service.

The application providing the IPTV service may include at least one application from among an IPTV service discovery application and a content guide application.

When the application providing the IPTV service is the IPTV service discovery application, the metadata may include URI information regarding the IPTV service discovery application for searching for at least one service provided by an IPTV service provider, and may be provided as a part of a service provider record. When the application providing the IPTV service is the content guide application, the metadata may include URI information regarding the content guide application for extracting content guide information, and may be provided as a part of a content guide offering record.

According to another embodiment of the present invention, the metadata may include at least one information from among an ID of an application, a name of the application, URI information for receiving an application icon, a kind of the application, information regarding a technology used in the application, priority of the application, URI information for connection with the application in a multicast manner, and URI information for connection with the application in a unicast manner. A user of an OITF entity apparatus may access each application by using the URI information for connection with the application in the unicast manner.

The metadata request message may be described in a HTTP REQUEST message, and a SIP SUBSCRIBE message.

According to another embodiment of the present invention, when the application providing the IPTV service is a content guide application, the metadata request message may be described in an IGMP JOIN message.

The message transmitter 1420 transmits the metadata request message generated by the message generator 1410 to a second entity apparatus 1440. The second entity apparatus 1440 may be the IPTV service provider discovery entity apparatus 31 or 44, or the IPTV service discovery entity apparatus 32, 54, or 63. Thus, the metadata may be transmitted to the second entity apparatus 1440 through a third apparatus such as the ASM entity apparatuses 45 and 55.

The message receiver 1430 may receive a metadata response message including metadata regarding an application providing at least one IPTV service from the second entity apparatus 1440, in response to the metadata request message transmitted by the message transmitter 1420. Like in the case for transmitting the metadata request message, the metadata response message may be received through a third apparatus such as the ASM entity apparatuses 45 and 55. In addition, the message receiver 1430 may receive a SIP message, that is, a SIP 200 OK message informing that the metadata request message transmitted from the message transmitter 1420 is normally received, from the second entity apparatus 1440. Similarly, the message transmitter 1420 may transmit a SIP 200 OK message informing that the metadata response message transmitted by the second entity apparatus 1440, to the second entity apparatus 1440, in response to the metadata request message.

The metadata response message may be described in a HTTP RESPONSE message, and a SIP NOTIFY message.

According to another embodiment of the present invention, when the application providing the IPTV service is a content guide application, the metadata response message may be described in a DVB STP multicast message.

FIG. 15 is a block diagram of a second entity apparatus 1500, according to an embodiment of the present invention.

The second entity apparatus 1500 includes a message receiver 1510, a message generator 1520, and a message transmitter 1530. The second entity apparatus 1500 may be the IPTV service provider discovery entity apparatus 31 or 44, or the IPTV service discovery entity apparatus 32, 54, or 63.

The message receiver 1510 receives a metadata request message for requesting metadata regarding an application providing at least one IPTV service. The metadata request message may be received through a third apparatus such as the ASM entity apparatuses 45 and, 55.

The application providing the IPTV service may include at least one application from among an IPTV service discovery application, and a content guide application.

When the application providing the IPTV service is the IPTV service discovery application, the metadata may include URI information regarding the IPTV service discovery application for searching for at least one service provided by an IPTV service provider, and may be provided as a part of a service provider record. When the application providing the IPTV service is the content guide application, the metadata may include URI information regarding the content guide application for extracting content guide information, and may be provided as a part of a content guide offering record.

According to another embodiment of the present invention, the metadata may include at least one information from among an ID of an application, a name of the application, URI information for receiving an application icon, a kind of the application, information regarding a technology used in the application, priority of the application, URI information for connection with the application in a multicast manner, and URI information for connection with the application in a unicast manner. A user of an OITF entity apparatus may access each application by using the URI information for connection with the application in the unicast manner.

The metadata request message may be described in a HTTP REQUEST message, and a SIP SUBSCRIBE message.

According to another embodiment of the present invention, when the application providing the IPTV service is a content guide application, the metadata request message may be described in an IGMP JOIN message.

The message generator 1520 generates a metadata response message including metadata regarding the application providing at least one IPTV service, in response to the metadata request message.

The message transmitter 1530 transmits the metadata response message generated by the message generator 1520 to a first entity apparatus 1540. The first entity apparatus 1540 may be the OITF entity apparatus 30, 42, or 60, or the IG entity apparatus 43 or 53. Thus, the metadata response message may be transmitted to the first entity apparatus 1540 through a third apparatus such as the ASM entity apparatuses 45 and 55.

Like in the case for receiving the metadata request message, the metadata response message may be transmitted through a third apparatus such as the ASM entity apparatuses 45 and 55.

In addition, the message transmitter 1530 may transmit a SIP message, that is, a SIP 200 OK information that the metadata request message received from the first entity apparatus 1540, to the first entity apparatus 1540. Similarly, the message receiver 1510 may receive a SIP 200 OK message informing that the metadata response message transmitted by the message transmitter 1530 is normally received, from the first entity apparatus 1540, in response to the metadata request message.

The metadata response message may be described in a HTTP RESPONSE message, and a SIP NOTIFY message.

According to another embodiment of the present invention, when the application providing the IPTV service is a content guide application, the metadata response message may be described in a DVB STP multicast message.

While the present invention has been particularly shown and described with reference to exemplary embodiments thereof, it will be understood by those of ordinary skill in the art that various changes in form and details may be made therein without departing from the spirit and scope of the present invention as defined by the following claims.

According to one or more embodiments of the present invention, an apparatus for transmitting and receiving metadata regarding an application providing an IPTV service may include a bus coupled to each unit illustrated in FIGS. 14 and 15, at least one processor coupled to the bus, and a memory coupled to the bus for storing commands, received messages, or generated messages, wherein the memory is coupled to the at least one processor for executing the above-described commands.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

## Claims

1. A method of receiving metadata regarding an application providing an internet protocol television (IPTV) service of a first entity apparatus, the method comprising:
generating a metadata request message for requesting metadata regarding an application providing at least one IPTV service;
transmitting the metadata request message to a second entity apparatus; and
receiving a metadata response message comprising the metadata regarding the application providing the at least one IPTV service, from the second entity apparatus, in response to the metadata request message.

2. The method of claim 1, wherein the application providing the IPTV service comprises at least one application from among an IPTV service discovery application, and a content guide application.

3. The method of claim 2, wherein, when the application providing the IPTV service is the IPTV service discovery application, the metadata comprises uniform resource identifier (URI) information regarding the IPTV service discovery application for searching for at least one service provided by an IPTV service provider.

4. The method of claim 2, wherein, when the application providing the IPTV service is the content guide application, the metadata comprises URI information regarding the content guide application for extracting content guide information.

5. The method of claim 2, wherein, when the application providing the IPTV service is the IPTV service discovery application, the metadata is provided as a part of a service provider record.

6. The method of claim 2, wherein, when the application providing the IPTV service is the content guide application, the metadata is provided as a part of a content guide offering record.

7. The method of claim 1, wherein the metadata comprises at least one information from among an identifier (ID) of an application, a name of the application, URI information for receiving an application icon, a kind of the application, information regarding a technology used in the application, priority of the application, URI information for connection with the application in a multicast manner, and URI information for connection with the application in a unicast manner.

8. The method of claim 1, wherein the metadata request message comprises a HTTP REQUEST message, and a SIP SUBSCRIBE message, and
wherein the metadata response message comprises a HTTP RESPONSE message, and a SIP NOTIFY message.

9. The method of claim 2, wherein, when the application providing the IPTV service is the content guide application, the metadata request message further comprises an internet group management protocol (IGMP) JOIN message, and the metadata response message further comprises a DVB STP multicast message.

10. The method of claim 1, wherein the first entity apparatus is an apparatus for performing a function corresponding to an entity defined in an open IPTV forum architecture, wherein the first entity apparatus is an open IPTV terminal function (OITF) entity apparatus that accesses the IPTV service, or an IMS gateway functional (IG) entity apparatus that allows the OITF entity apparatus to access a network service, based on an IP multimedia subsystem (IMS) core network.

11. The method of claim 2, wherein, when the application providing the IPTV service is the IPTV service discovery application, the second entity apparatus is an apparatus for performing a function corresponding to an entity defined in an open IPTV forum architecture, wherein the second entity apparatus is an IPTV service provider discovery entity apparatus for providing information that is required for an OITF entity apparatus to select at least one IPTV service provider.

12. The method of claim 2, wherein, when the application providing the IPTV service is the content guide application, the second entity apparatus is an apparatus for performing a function corresponding to an entity defined in an open IPTV forum architecture, wherein the second entity apparatus is an IPTV service discovery entity apparatus for searching for at least one service provided by an IPTV service provider.

13. A method of transmitting metadata regarding an application providing an internet protocol television (IPTV) service of a second entity apparatus, the method comprising:
receiving metadata request message for requesting metadata regarding an application providing at least one IPTV service;
generating a metadata response message comprising the metadata regarding the application providing the at least one IPTV service, in response to the metadata request message; and
transmitting the metadata response message to a first entity apparatus.

14. The method of claim 13, wherein the application providing the IPTV service comprises at least one application from among an IPTV service discovery application, and a content guide application.

15. The method of claim 14, wherein, when the application providing the IPTV service is the IPTV service discovery application, the metadata comprises uniform resource identifier (URI) information regarding the IPTV service discovery application for searching for at least one service provided by an IPTV service provider.

16. The method of claim 14, wherein, when the application providing the IPTV service is the content guide application, the metadata comprises URI information regarding the content guide application for extracting content guide information.

17. The method of claim 14, wherein, when the application providing the IPTV service is the IPTV service discovery application, the metadata is provided as a part of a service provider record.

18. The method of claim 14, wherein, when the application providing the IPTV service is the content guide application, the metadata is provided as a part of a content guide offering record.

19. The method of claim 13, wherein the metadata comprises at least one information from among an identifier (ID) of an application, a name of the application, URI information for receiving an application icon, a kind of the application, information regarding a technology used in the application, priority of the application, URI information for connection with the application in a multicast manner, and URI information for connection with the application in a unicast manner.

20. The method of claim 13, wherein the metadata request message comprises a HTTP REQUEST message, and a SIP SUBSCRIBE message, and
wherein the metadata response message comprises a HTTP RESPONSE message, and a SIP NOTIFY message.

21. The method of claim 14, wherein, when the application providing the IPTV service is the content guide application, the metadata request message further comprises an internet group management protocol (IGMP) JOIN message, and the metadata response message further comprises a DVB STP multicast message.

22. The method of claim 13, wherein the first entity apparatus is an apparatus for performing a function corresponding to an entity defined in an open IPTV forum architecture, wherein the first entity apparatus is an open IPTV terminal function (OITF) entity apparatus that accesses the IPTV service, or an IMS gateway functional (IG) entity apparatus that allows the OITF entity apparatus to access a network service, based on an IP multimedia subsystem (IMS) core network.

23. The method of claim 14, wherein, when the application providing the IPTV service is the IPTV service discovery application, the second entity apparatus is an apparatus for performing a function corresponding to an entity defined in an open IPTV forum architecture, wherein the second entity apparatus is an IPTV service provider discovery entity apparatus for providing information that is required for an OITF entity apparatus to select at least one IPTV service provider.

24. The method of claim 14, wherein, when the application providing the IPTV service is the content guide application, the second entity apparatus is an apparatus for performing a function corresponding to an entity defined in an open IPTV forum architecture, and the second entity apparatus is an IPTV service discovery entity apparatus for searching for at least one service provided by an IPTV service provider.

25. A first entity apparatus for receiving metadata regarding an application providing an internet protocol television (IPTV) service, the first entity apparatus comprising:
a message generator for generating a metadata request message for requesting metadata regarding an application providing at least one IPTV service;
a message transmitter for transmitting the metadata request message to a second entity apparatus; and
a message receiver for receiving a metadata response message comprising the metadata regarding the application providing the at least one IPTV service, from the second entity apparatus, in response to the metadata request message.

26. The first entity apparatus of claim 25, wherein the application providing the IPTV service comprises at least one application from among an IPTV service discovery application, and a content guide application.

27. The first entity apparatus of claim 26, wherein, when the application providing the IPTV service is the IPTV service discovery application, the metadata comprises uniform resource identifier (URI) information regarding the IPTV service discovery application for searching for at least one service provided by an IPTV service provider.

28. The first entity apparatus of claim 26, wherein, when the application providing the IPTV service is the content guide application, the metadata comprises URI information regarding the content guide application for extracting content guide information.

29. The first entity apparatus of claim 25, wherein the metadata comprises at least one information from among an identifier (ID) of an application, a name of the application, URI information for receiving an application icon, a kind of the application, information regarding a technology used in the application, priority of the application, URI information for connection with the application in a multicast manner, and URI information for connection with the application in a unicast manner.

30. A second entity apparatus for transmitting metadata regarding an application providing an internet protocol television (IPTV) service, the second entity apparatus comprising:
a message receiver for receiving metadata request message for requesting metadata regarding an application providing at least one IPTV service;
a message generator for generating a metadata response message comprising the metadata regarding the application providing the at least one IPTV service, in response to the metadata request message; and
a message transmitter for transmitting the metadata response message to a first entity apparatus.

31. The second entity apparatus of claim 30, wherein the application providing the IPTV service comprises at least one application from among an IPTV service discovery application, and a content guide application.

32. The second entity apparatus of claim 31, wherein, when the application providing the IPTV service is the IPTV service discovery application, the metadata comprises uniform resource identifier (URI) information regarding the IPTV service discovery application for searching for at least one service provided by an IPTV service provider.

33. The second entity apparatus of claim 31, wherein, when the application providing the IPTV service is the content guide application, the metadata comprises URI information regarding the content guide application for extracting content guide information.

34. The second entity apparatus of claim 30, wherein the metadata comprises at least one information from among an identifier (ID) of an application, a name of the application, URI information for receiving an application icon, a kind of the application, information regarding a technology used in the application, priority of the application, URI information for connection with the application in a multicast manner, and URI information for connection with the application in a unicast manner.

35. A computer readable recording medium having recorded thereon a program for executing any one method of claims 1 through 24.
